# EUROPÄISCHE PATENTSCHRIFT

(11) **EP 1 308 240 B1**
(45) Veröffentlichungstag und Bekanntmachung des Hinweises auf die Patenterteilung: **27.02.2008**
(21) Anmeldenummer: 02021959.8
(22) Anmeldetag: 30.09.2002
(51) Int. Cl.: B24B 1/00, H01F 1/44

(54) **Dispersion, enthaltend pyrogen hergestellte Abrasivpartikel mit superparamagnetischen Domänen**
Dispersion containing abrasive particles produced by pyrogenesis which contain superparamagnetic domains
Dispersion, comprenant des particules abrasives produites par pyrogénèse contenantes des domaines superparamagnétiques

(30) Priorität: 30.10.2001 DE 10153547
(43) Veröffentlichungstag der Anmeldung: 07.05.2003
(73) Patentinhaber: Evonik Degussa GmbH, 40474 Düsseldorf (DE)
(72) Erfinder: Gottfried, Heiko, 61137 Schöneck (DE); Pridöhl, Markus, Dr., 63538 Grosskrotzenburg (DE); Trageser, Berthold, 63579 Freigericht (DE); Zimmermann, Guido, 63454 Hanau (DE); Heberer, Stefan, 63571 Gelnhausen (DE); Mühlenweg, Heike, Dr., 61130 Nidderau (DE)

(56) Entgegenhaltungen:
- WO-A-00/68332
- WO-A-01/37291
- WO-A-94/10694

## Beschreibung

Die Erfindung betrifft eine Abrasivpartikel enthaltende Dispersion, deren Herstellung und Verwendung.

Beim chemisch-mechanischen Polieren (CMP-Prozess) von oxidischen und metallischen Oberflächen aus Materialien mit sehr niedrigen Dielektrizitätskonstanten, sogenannten "low-k"-Oberflächen, spielt die Polier-Dispersion eine zentrale Rolle. In der Regel enthält diese Dispersion neben anderen Bestandteilen, Abrasivpartikel oder Mischungen von Abrasivpartikeln. Mit der fortschreitenden Miniaturisierung in der Elektronikindustrie steigen die Anforderungen an die Polier-Dispersion weiter.

In US 6083839 ist nun die Verwendung von magnetischen Dispersionen im CMP-Prozess zum Polieren von "low-k"-Oberflächen beschrieben. Die Poliervorrichtung ihrerseits ist mit magnetischen Spulen, die gleiche oder unterschiedliche Feldstärken induzieren können, versehen, und die räumlich verschieden anzuordnen sind. Ferner kann der Abstand zu der zu polierenden Oberfläche variiert werden und dadurch die Kraftwirkung der magnetischen Partikel auf die zu polierende Oberfläche variiert werden.

Nachteilig bei der in US 6083839 beschriebenen magnetischen Dispersion ist, dass es sich um nicht einheitliche Partikel, nämlich um eine physikalische Mischung aus Siliziumdioxid bzw. Ceroxid und ferromagnetischen Partikeln handelt, die verschiedene Partikelgrößen, unterschiedliche Härten und unterschiedliches Verhalten in einer wässerigen Dispersion aufweisen können. Die Rolle des Siliziumdioxides bzw. Ceroxides soll die eines Abrasives sein. Die ferromagnetischen Partikel sollen in Verbindung mit den magnetischen Spulen die Bewegung der Partikel bewirken. In der Realität lassen sich die Partikeleigenschaften nicht exakt trennen. So weisen auch die ferromagnetischen Partikel Abrasiveigenschaften auf und neigen zur Reagglomeration und eventuell zur Sedimentation. Andererseits wird die magnetische Beeinflussung nur teilweise auf die nichtmagnetischen Partikel übertragen.

In US 6238279 ist daher sogar eine Methode beschrieben magnetische Partikel, in diesem Fall Eisenoxid-Partikel, vor dem CMP-Prozess zu entfernen.

Nachteilig in US 608339 ist ferner, dass die Kraftwirkung und die Bewegung der Dispersion im wesentlichen über die ferromagnetischen Partikel und nicht über die Abrasivpartikel, die den Abtrag der Oberfläche bewirken sollen, erfolgen. Die Abrasivpartikel werden also in der Dispersion durch die Bewegung der ferromagnetischen Partikel mitbewegt, erfahren jedoch keinen Druck auf die Oberfläche. Dies kann zu einer Reduzierung oder ungleichen Abtragung führen.

Aufgabe der Erfindung ist es eine Dispersion bereitzustellen, die die Nachteile des Standes der Technik vermeidet.

Gegenstand der Erfindung ist eine Abrasivpartikel enthaltende Dispersion, welche dadurch gekennzeichnet ist, dass sie pyrogen hergestellte Partikel enthält, die superparamagnetische Metalloxid-Domänen in einer nichtmagnetischen Metall- oder Metalloidoxid-Matrix aufweisen.

Unter Dispersion im Sinne der Erfindung ist zu verstehen, eine Feinverteilung der Abrasivpartikel in einem Medium, enthaltend wässerige und/oder organische Phasen als Dispersionsmittel.

Unter pyrogen hergestellten Partikel sind hochdisperse Partikel zu verstehen, die in der Gasphase bei hohen Temperaturen erhalten werden. In Ullmann's Encyclopedia of Industrial Chemistry, Vol. A23, Seite 635 ff, 5. Auflage wird dies am Beispiel von Siliziumdioxid näher erläutert.

Unter Domänen sind dabei räumlich voneinander getrennte superparamagnetische Bereiche in und auf der Oberfläche der Metall- oder Metalloidoxidmatrix zu verstehen. Bedingt durch den pyrogenen Herstellprozess sind die Abrasivpartikel weitestgehend porenfrei und weisen auf der Oberfläche freie Hydroxylgruppen auf. Bei Anlegen eines äußeren Magnetfeldes weisen diese Partikel superparamagnetische Eigenschaften auf. Sie sind jedoch nicht permanent magnetisiert und weisen nur eine kleine Restmagnetisierung auf.

Unter superparamagnetisch ist die Eigenschaft von Stoffen zu verstehen, bei Abwesenheit äusserer, einwirkender Magnetfelder keine permanente (gleichgerichtete) Anordnung der elementaren magnetischen Dipole aufzuweisen. In Gegenwart eines äußeren Magnetfeldes weisen sie jedoch ähnlich hohe magnetische Suszeptibilitäten wie ferromagnetische Stoffe auf. Superparamagnetismus tritt auf, wenn der Durchmesser der kristallinen Bereiche in einer normalerweise ferromagnetischen Substanz einen bestimmten, kritischen Wert unterschreitet.

Der Anteil der superparamagnetischen Domänen der Partikel kann zwischen 1 und 99,6 Gew.-% liegen. In diesem Bereich liegen durch die nicht magnetische Matrix räumlich getrennte Bereiche von superparamagnetischen Domänen vor. Bevorzugt ist der Bereich mit einem Anteil an superparamagnetischen Domänen größer 30 Gew.-%, besonders bevorzugt größer 50 Gew.-%. Mit dem Anteil der superparamagnetischen Bereiche nimmt auch die erzielbare magnetische Wirkung auf die Partikel zu.

Die superparamagnetischen Domänen können bevorzugt die Oxide von Fe, Cr, Eu, Y, Sm oder Gd enthalten, von denen superparamagnetische Eigenschaften bereits bekannt sind. In diesen Domänen können die Metalloxide in einer einheitlichen Modifikation oder in verschiedenen Modifikationen vorliegen.

Daneben können auch Bereiche nicht magnetischer Modifikationen in den Partikeln vorliegen. Diese können Mischoxide der nichtmagnetischen Matrix mit den Domänen sein. Als Beispiel hierfür soll Eisensilikalit (FeSiO₄) dienen. Diese nichtmagnetischen Bestandteile verhalten sich bezüglich des Superparamagnetismus wie die nichtmagnetische Matrix. Das heißt, die Partikel sind nach wie vor superparamagnetisch, mit steigendem Anteil der nichtmagnetischen Bestandteile sinkt jedoch die Sättigungsmagnetisierung.

Besonders bevorzugte superparamagnetische Domäne ist Eisenoxid in der Form von gamma-Fe₂O₃ (γ-Fe₂O₃), Fe₃O₄, Mischungen aus gamma-Fe₂O₃ (γ-Fe₂O₃) und Fe₃O₄ und/oder Mischungen der vorgenannten mit Eisen enthaltenden, nicht magnetischen Verbindungen.

Die nichtmagnetische Metall- oder Metalloidoxidmatrix kann die Oxide der Metalle und Metalloide von Si, Al, Ti, Ce, Mg, Zn, B, Zr oder Ge umfassen. Besonders bevorzugt ist Siliziumdioxid. Neben der räumlichen Trennung der superparamagnetischen Domänen kommt der Matrix auch die Aufgabe zu, die Oxidationsstufe der superparamagnetischen Domäne zu stabilisieren. So wird zum Beispiel Magnetit als superparamagnetische Eisenoxidphase durch eine Siliziumdioxidmatrix stabilisiert.

Die pyrogen hergestellten Abrasivpartikel der erfindungsgemäßen Dispersion können Partikel mit superparamagnetische Metalloxid-Domänen mit einem Durchmesser von 3 bis 20 nm in einer nichtmagnetischen Metall- oder Metalloidmatrix sein. Die Partikel können einen Chloridgehalt von 50 bis 1000 ppm und einen Kohlenstoffgehalt von weniger als 500 ppm, bevorzugt weniger als 100 ppm aufweisen.

Die Partikel weisen in Abhängigkeit von der Führung des pyrogenen Prozesses unterschiedliche Aggregationsgrade auf. Einflußparameter können Verweilzeit, Temperatur, Druck, die Partialdrücke der eingesetzten Verbindungen, die Art und der Ort des Abkühlens nach der Reaktion sein. So kann ein breites Spektrum von weitestgehend sphärischen bis weitestgehend aggregierten Partikel erhalten werden.

Die Partikel können zum Beispiel durch einen pyrogenen Prozess erhalten werden. Dabei kann eine Verbindung, die die Metallkomponenten der superparamagnetischen Domäne enthält und eine Verbindung, die die Metall- oder Metalloidkomponente der nichtmagnetischen Matrix enthält, entsprechend dem später gewünschten Verhältnis verdampft werden, mit Luft und/oder Sauerstoff und Brenngas gemischt und in einem Brenner zur Reaktion gebracht werden.

Die Reaktionspartner, Vorläufer der Metalloxid- oder Metalloidoxidmatrix und der superparamagnetischen Domänen, können dabei zum Beispiel beide anorganischer oder beide organischer Natur oder ein Gemisch aus anorganischen und organischen Verbindungen sein.

Die Partikel können durch Adsorption, Reaktionen an der Oberfläche oder Komplexierung von bzw. mit anorganischen und organischen Reagenzien modifiziert werden.

Zum Beispiel können die Partikel durch eine nachfolgende Behandlung mit Oberflächenmodifizierungsreagenzien eine teilweise oder vollständig hydrophobierte Oberfläche erhalten. Die Herstellung kann analog denen in DE-A-11 63 784, DE-A-196 16 781, DE-A-197 57 210 oder DE-A-44 02 370, DE-A 4202695, DE-A-4202694 für Siliziumdioxid, Titandioxid und Aluminiumoxid beschriebenen Verfahren erfolgen.

Die Partikel können ferner teilweise oder vollständig mit einem weiteren Metall- oder Metalloidoxid umhüllt sein. Dies kann beispielsweise dadurch erfolgen, dass die Partikel in einer Lösung enthaltend metallorganische Verbindungen dispergiert werden. Nach Zugabe eines Hydrolysierkatalysators wird die metallorganische Verbindung in ihr Oxid überführt, das sich auf den Partikeln abscheidet. Beispiele solcher metallorganischer Verbindungen sind die Alkoholate des Siliziums (Si(OR)₄), Aluminiums (Al(OR)₃) oder Titans (Ti(OR)₄).

Die Teilchengröße der Abrasivpartikel in der erfindungsgemäßen Dispersion kann in einer bevorzugten Ausführungsform kann kleiner als 400 nm sein. Besonders bevorzugt ist der Bereich kleiner als 150 nm.

Die in der erfindungsgemäßen Dispersion dispergierten Partikel können eine BET-Oberfläche zwischen 50 und 600 m²/g aufweisen.

Der Feststoffgehalt der erfindungsgemäßen Dispersion richtet sich in erster Linie nach der beabsichtigten Verwendung. Um Transportkosten einzusparen wird man eine Dispersion mit möglichst hohem Feststoffgehalt anstreben, während bei bestimmten Anwendungen, wie z.B. beim chemisch-mechanischen Polieren Dispersionen mit niedrigen Feststoffgehalten eingesetzt werden. Bevorzugt gemäß der Erfindung ist ein Feststoffgehalt von 0,1 bis 70 Gew.-%, bezogen auf die Gesamtmenge der Dispersion, besonders bevorzugt der Bereich zwischen 1 und 30 Gew.-%. In diesem Bereich zeigt die erfindungsgemäße Dispersion eine gute Stabilität.

Die Dispersion kann einen pH-Wert zwischen 3 und 12 aufweisen. Bevorzugt kann er zwischen 6 und 10,5 liegen. Die Einstellung des pH-Wertes kann durch Säuren oder Basen erfolgen und dient dazu die Stabilität der Dispersion zu erhöhen. Dabei ist zum einen der isoelektrische Punkt der Abrasivpartikel, zum anderen die Stabilität anderer in Dispersion vorhandener Stoffe, zum Beispiel des Oxidationsmittels, zu beachten.

Als Säuren können anorganische Säuren, organische Säuren oder Mischungen der vorgenannten Verwendung finden.

Als anorganische Säuren können insbesondere Phosphorsäure, Phosphorige Säure, Salpetersäure, Salzsäure, Schwefelsäure, Mischungen daraus, und ihre sauer reagierenden Salze Verwendung finden.

Als organische Säuren finden bevorzugt Carbonsäuren der allgemeinen Formel CₙH₂ₙ₊₁CO₂H, mit n=0-6 oder n= 8,10,12, 14, 16, oder Dicarbonsäuren der allgemeinen Formel HO₂C(CH₂)ₙCO₂H, mit n=0-4, oder Hydroxycarbonsäuren der allgemeinen Formel R₁R₂C(OH)CO₂H, mit R₁=H, R₂=CH₃, CH₂CO₂H, CH(OH)CO₂H, oder Phthalsäure oder Salicylsäure, oder sauer reagierende Salze der vorgenannten Säuren oder Mischungen der vorgenannten Säuren und ihrer Salze.

Eine Erhöhung des pH-Wertes kann durch Addition von Ammoniak, Alkalihydroxiden, Aminen oder Tetraalkylammoniumhydroxiden erfolgen. Besonders bevorzugt sind Ammoniak und Kaliumhydroxid.

Desweiteren kann die erfindungsgemäße Dispersion 0,3 bis 20 Gew.-%, bezogen auf die Gesamtmenge der Dispersion, mindestens eines Oxidationsmittels enthalten, welches Wasserstoffperoxid, ein Wasserstoffperoxid-Addukt, wie zum Beispiel das Harnstoff-Addukt, eine organische Persäure, eine anorganische Persäure, eine Iminopersäure, ein Persulfate, Perborat, Percarbonat, oxidierende Metallsalze und/oder Mischungen der vorgenannten sein kann. Besonders bevorzugt sind Wasserstoffperoxid und dessen Addukte.

Aufgrund der verringerten Stabilität einiger Oxidationsmittel gegenüber anderen Bestandteilen der erfindungsgemäßen Dispersion kann es sinnvoll sein, dieses erst unmittelbar vor der Benutzung der Dispersion hinzuzufügen.

Weiterhin kann die erfindungsgemäße Dispersion mindestens einen Oxidationsaktivator enthalten, dessen Zweck es ist die Oxidationsgeschwindigkeit beim chemisch-mechanischen Polieren zu erhöhen. Geeignete Oxidationskatalysatoren sind die Metallsalze von Ag, Co, Cr, Cu, Fe, Mo, Mn, Ni, Os, Pd, Ru, Sn, Ti, V und Mischungen daraus. Weiterhin sind Carbonsäuren, Nitrile, Harnstoffe, Amide und Ester geeignet. Die Konzentration des Oxidationskatalysators kann abhängig vom Oxidationsmittel und der Polieraufgabe in einem Bereich zwischen 0,001 und 2 Gew.-%, bezogen auf die Gesamtmenge der Dispersion, variiert werden. Besonders bevorzugt ist ein Bereich zwischen 0,01 und 0,05 Gew.-%.

Ferner kann die erfindungsgemäße Dispersion 0,001 bis 2 Gew.-%, bezogen auf die Gesamtmenge der Dispersion, mindestens eines Korrosionsinhibitors enthalten. Geeignete Inhibitoren umfassen die Gruppe von Stickstoff enthaltenden Heterocylen wie Benzotriazol, substituierte Benzimidazole, substituierte Pyrazine, substituierte Pyrazole und deren Mischungen.

Um die Dispersion weiter, zum Beispiel gegen Absetzen des Abrasives, Ausflockungen und Zersetzung des Oxidationsmittels zu stabilisieren, können ihr 0,001 bis 10 Gew.-%, bezogen auf die Gesamtmenge der Dispersion, mindestens eines oberflächenaktiven Stoffes zugesetzt werden, der nichtionischer, kationischer, anionischer oder amphoterer Art sein kann.

Die erfindungsgemäße Dispersion kann auch wechselnde Mengen von Metall- oder Metalloidoxiden als weitere Abrasive enthalten. In einer besonderen Ausführungsform können diese die Oxide von Siliziumdioxid, Aluminiumoxid, Titandioxid, Zirkonoxid, Ceroxid und/oder Germaniumoxid sein. Besonders bevorzugt sind pyrogen hergestellte Oxide, sowie ihre physikalischen und chemischen Mischungen. Unter chemischen Mischungen sind solche zu verstehen, die aus den vor der pyrogenen Reaktion gemischten Vorläufern der pyrogenen Oxide resultieren. Chemische Mischungen von pyrogenen Oxiden umfassen auch dotierte Oxide, wie sie zum Beispiel in DE 196 50 500 beschrieben sind. Die erfindungsgemäße Dispersion kann ferner auch magnetische Metallpartikel, wie zum Beispiel Eisenpartikel, enthalten.

Die erfindungsgemäße Dispersion enthält im Gegensatz zu US 6083839 einheitliche Abrasivpartikel, die beim chemisch-mechanischen Polieren zu einem einheitlichen Polierergebnis führen. Ferner zeigt die Dispersion eine wesentlich höhere Stabilität im Bezug auf Reagglomeration und Sedimentation als eine Dispersion, welche ferromagnetische Partikel enthält. Unter Stabilität ist sowohl die Lagerstabilität als auch die Stabilität während des Poliervorgangs zu verstehen. Ferner führen die Partikel der erfindungsgemäßen Dispersion, die den magnetischen und abrasiven Teil in einem Partikel realisieren, dazu, dass diese bei einem angelegten Magnetfeld einen gleichmäßigen Druck auf die zu polierende Oberfläche ausüben. Dies führt zu konstanten Abtragsraten über die gesamte zu polierende Oberfläche.

Ein weiterer Gegenstand der Erfindung ist ein Verfahren zur Herstellung der Dispersion mit Dispergier- und/oder Mahlvorrichtungen, die einen Energieeintrag von mindestens 200 KJ/m³ bewirken. Hierzu zählen Systeme nach dem Rotor-Stator-Prinzip, zum Beispiel Ultra-Turrax-Maschinen, oder Rührwerkskugelmühlen. Höhere Energieeinträge sind mit einem Planetenkneter/-mixer möglich. Die Wirksamkeit dieses Systems ist jedoch mit einer ausreichend hohen Viskosität der bearbeiteten Mischung verbunden, um die benötigten hohen Scherenergien zum Zerteilen der Teilchen einzubringen.

Mit Hochdruckhomogenisierern können Dispersionen erhalten mit Partikelgrößen von kleiner als 150 nm erhalten werden.

Bei diesen Vorrichtungen werden zwei unter hohem Druck stehende vordispergierte Suspensionsströme über eine Düse entspannt. Beide Dispersionsstrahlen treffen exakt aufeinander und die Teilchen mahlen sich selbst. Bei einer anderen Ausführungsform wird die Vordispersion ebenfalls unter hohen Druck gesetzt, jedoch erfolgt die Kollision der Teilchen gegen gepanzerte Wandbereiche. Die Operation kann beliebig oft wiederholt werden um kleinere Teilchengrößen zu erhalten.

Ein weiterer Gegenstand der Erfindung ist die Verwendung der erfindungsgemäßen Dispersion zum chemisch-mechanischen Polieren von dielektrischen Schichten, wie Siliziumdioxidund Nitridschichten, Metallschichten, Metalloidschichten und Schichten aus Materialien mit sehr niedrigen Dielektrizitätskonstanten, sogenannte "Low-k"-Materialien.

Diese "low-k"-Materialien, in der Regel polymere, organischen Materialien neigen beim chemisch-mechanischen Polieren dazu sich zu deformieren, zum Beispiel sich zu verbiegen. Dies kann zur Bildung nichteinheitlicher Oberflächen beim Polieren führen. Ferner sind diese Materialien in der Regel relativ weich, was zu Kratzern beim Polieren führen kann. Die erfindungsgemäße Dispersion kann insbesondere in Kombination mit Poliervorrichtungen, bei denen die Kraftwirkung der Abrasivpartikel auf die zu polierende Oberfläche nicht mit einem Stempel erfolgt, sondern über magnetische Felder, wie zum Beispiel in US 6083839 beschrieben, erfolgreich zum Polieren von "low-k"-Materialien eingesetzt werden.

Beim Polieren von Metalloberflächen, bei denen in der Regel ein Oxidationsmittel eingesetzt wird, können die Abrasivpartikel der erfindungsgemäßen Dispersion zugleich als Oxidationskatalysator dienen und dessen Funktion vollständig oder teilweise übernehmen. Insbesondere mit Eisenoxid als superparamagnetischer Domäne der Abrasivpartikel der erfindungsgemäßen Dispersion kann eine Oxidationsbeschleunigung erzielt werden. Durch die Verwendung eines festen Oxidationskatalysators mit definierter Größe kann das in US 6238279 beschriebene Problem der Oxidation der üblicherweise in CMP-Prozessen verwendeten löslichen Eisenverbindungen, wie zum Beispiel Eisen-II-nitrat, in Gegenwart eines Oxidationsmittels, die zu Eisenoxid-Aggregaten und -Agglomeraten unheitlicher Größe führt, vermieden werden.

Weiterhin ermöglicht die superparamagnetische Natur der Abrasivpartikel der erfindungsgemäßen Dispersion diese nach dem Polierprozess durch Anlegen eines äußeren Magnetfeldes von der verunreinigten Dispersion abzutrennen und gegebenenfalls wieder einzusetzen oder aufzubereiten.

### Beispiele

### Analytik

Die mittleren Partikelgrößen d₅₀ der erfindungsgemäßen Dispersionen wurden bestimmt mit einem Partikelgrößenanalysator LB-500, Fa. Horiba.

### Pulver

Die Pulver werden hergestellt wie in der deutschen Anmeldung, Anmelde-Nr. 10140089.6 vom 16.08.2001 (EP-A-1 284 485) beschrieben.

0,57 kg/h SiCl₄ werden bei ca. 200°C verdampft und mit 4,1 Nm³/h Wasserstoff sowie 11 Nm³/h Luft in eine Mischzone eingespeist.

Zusätzlich wird ein Aerosol, das aus einer 25 gewichtsprozentigen wässerigen Eisen(III)chloridlösung mittels einer Zweistoffdüse, erhalten wird, mittels eines Traggases (3 Nm³/h Stickstoff) in die Mischzone innerhalb des Brenners eingebracht.

Das homogen gemischte Gas-Aerosol-Gemisch verbrennt dort bei einer adiabaten Verbrennungstemperatur von etwa 1400°C und einer Verweilzeit von etwa 50 msec.

Die adiabate Verbrennungstemperatur errechnet sich aus der Massen- und Energiebilanz der in den Reaktor eingehenden Stoffströme. Bei der Energiebilanz wird sowohl die Reaktionsenthalpie der Wasserstoffverbrennung und der Umsetzung des Siliciumtetrachlorids zu Siliciumdioxid bzw. des Eisen(III)chlorides zu Eisen(II)oxid berücksichtigt als auch die Verdampfung der wässerigen Lösung.

Die Verweilzeit errechnet sich aus dem Quotienten des durchströmten Anlagenvolumens und des Betriebsvolumenstroms der Prozeßgase bei adiabater Verbrennungstemperatur.

Nach der Flammenhydrolyse werden in bekannter Art die Reaktionsgase und das entstandene mit Eisenoxid dotierte Siliciumdioxid-Pulver P1 abgekühlt und mittels eines Filter wird der Feststoff von dem Abgasstrom abgetrennt.

In einem weiteren Schritt werden durch Behandlung mit wasserdampfhaltigem Stickstoff noch anhaftende Salzsäurereste vom Pulver entfernt.

Die Pulver P2 und P3 werden analog P1 hergestellt. Die Reaktionsparameter sind Tabelle 1 und die analytischen Daten der Pulver P1-P3 sind Tabelle 2 zu entnehmen.

**Tabelle 1: Reaktionsparameter bei der Pulverherstellung**

| | | **P1** | **P2** | **P3** |
|---|---|---|---|---|
| SiCl₄ | kg/h | 0,57 | 0,57 | 0,23 |
| FeCl₃ | kg/h | 1,27 | 4,06 | 0,41 |
| Konz. FeCl₃ | [Gew.-%] | 25 | 10 | 10 |
| Adiabate Temp. | °C | 1400 | 1010 | 1150 |
| Verweilzeit (ca.) | ms | 50 | 55 | 54 |

**Tabelle 2: Analytische Daten der Pulver 1 bis 3**

| | | | | | |
|---|---|---|---|---|---|
| **Pulver** | **Domäne** | **Domäne: SiO₂** | **BET** | **Größe Maghemit** | **Sättigungsmagn.** |
| | | [Gew.-%] | [m²/g] | [nm] | [Am²/kg] |
| P1 | Maghemit/ Magnetit | 50:50 | 52 | ca. 24 | 27,5 |
| P2 | Maghemit/ Magnetit | 50:50 | 120 | ca. 15 | 10 |
| P3 | Maghemit/ Magnetit | 20:80 | 174 | ca. 11 | 6,5 |

### Dispersionen

Als Dispergiervorrichtungen werden verwendet:

Dissolver: Typ LR 34 mit Dispergierscheibe (d=40 mm), Fa. Pendraulik, Springe (Deutschland).

Ultra Turrax: T25 basic mit Dispergierwerkzeug S 25N - 25G, Fa. IKA, Staufen (Deutschland)

Ultraschall-Prozessor UP400 S mit Ultraschallfinger 7 mm Durchmesser , Fa. Dr. Hielscher, Stuttgart (Deutschland)

**Dispersion D1:** 12,0 g des Pulvers P1 werden in 108 g destilliertes Wasser gegeben und anschliessend soviel 1M NaOH zugegeben, dass der pH-Wert zwischen 9,1 und 9,2 liegt. Mittels eines Dissolvers wird 5 min bei 2000 U/min dispergiert.

**Dispersion D2:** wie D1, jedoch anschließend an Dispergierung mittels Dissolver, Dispergierung mittels eines Ultraturrax über einen Zeitraum von 5 min bei 10 000 U/min.

**Dispersion D3:** wie D2, jedoch anschließend an Dispergierung mittels Dissolver und Ultraturrax, Dispergierung mittels Ultraschall über einen Zeitraum von 4 min bei einer Amplitude von 80 %.

**Dispersion D4 bis D7:** 9,6 g des Pulvers P1 werden in 110,4 g destilliertes Wasser gegeben und anschliessend soviel 1M NaOH zugegeben, dass der pH-Wert bei D4 bei 7,8, bei D5 bei 8,9, bei D6 bei 9,8 und bei D7 bei 10,7 liegt. Anschliessend wird wie unter D3 beschrieben dispergiert.

**Dispersion D8:** 0,6 g des Pulvers P2 werden in 119,4 g destilliertes Wasser gegeben und ohne Zugabe von NaOH wie unter D1 beschrieben dispergiert.

**Dispersion D9:** 0,6 g des Pulvers P2 werden in 119,4 g destilliertes Wasser gegeben und ohne Zugabe von NaOH wie unter D2 beschrieben dispergiert.

**Dispersion D10:** 0,6 g des Pulvers P2 werden in 119,4 g destilliertes Wasser gegeben und ohne Zugabe von NaOH wie unter D3 beschrieben dispergiert.

**Dispersion D11:** 6 g des Pulvers P2 werden in 114 g destilliertes Wasser gegeben und ohne Zugabe von NaOH wie unter D1 beschrieben dispergiert.

**Dispersion D12:** 6 g des Pulvers P2 werden in 114 g destilliertes Wasser gegeben und ohne Zugabe von NaOH wie unter D2 beschrieben dispergiert.

**Dispersion D13:** 6 g des Pulvers P2 werden in 114 g destilliertes Wasser gegeben und ohne Zugabe von NaOH wie unter D3 beschrieben dispergiert.

**Dispersion D14:** 6 g des Pulvers P3 werden in 114 g destilliertes Wasser gegeben und und anschliessend soviel 1M NaOH zugegeben, dass der pH-Wert bei 7,8 liegt. Anschliessend wird wie unter D3 beschrieben dispergiert.

**Dispersion D15:** 12 g des Pulvers P3 werden in 108 g destilliertes Wasser gegeben und und anschliessend soviel 1M NaOH zugegeben, dass der pH-Wert bei 8,8 liegt. Anschliessend wird wie unter D3 beschrieben dispergiert.

Die analytischen Werte der Dispersionen sind der Tabelle 3 zu entnehmen.

**Tab. 3: Herstellung und analytische Werte der Dispersionen**

| **Dispersion** | **Pulver** | **Methode(*)** | **Füllgrad** | **pH** | **Partikelgröße d₅₀^{(**)}** |
|---|---|---|---|---|---|
| | | | [Gew.-%] | | [nm] |
| D1 | P1 | D | 10 | 9,1 | 310 |
| D2 | P1 | UT | 10 | 9,1 | 200 |
| D3 | P1 | US | 10 | 9,1 | 140 |
| D4 | P1 | US | 8 | 7,8 | 590 |
| D5 | P1 | US | 8 | 8,9 | 250 |
| D6 | P1 | US | 8 | 9,8 | 120 |
| D7 | P1 | US | 8 | 10,7 | 180 |
| D8 | P2 | D | 0,5 | ca. 3 | 1420 |
| D9 | P2 | UT | 0,5 | ca. 3 | 610 |
| D10 | P2 | US | 0,5 | ca. 3 | 380 |
| D11 | P2 | D | 5 | ca. 3 | 880 |
| D12 | P2 | UT | 5 | ca. 3 | 60 |
| D13 | P2 | US | 5 | ca. 3 | 110 |
| D14 | P3 | US | 5 | 7,8 | 590 |
| D15 | P3 | US | 10 | 8,8 | 180 |

| | | | | | |
|---|---|---|---|---|---|
| (*) D: Dissolver; UT:Dissolver + Ultraturrax; US: Dissolver + Ultraturrax + Ultraschall | | | | | |
| (**) bestimmt 48 Stunden nach Dispersionsherstellung | | | | | |

## Patentansprüche

1. Abrasivpartikel enthaltende Dispersion, **dadurch gekennzeichnet, dass** diese pyrogen hergestellte Partikel enthält, die superparamagnetischen Metalloxid-Domänen in einer nichtmagnetischen Metall- oder Metalloidoxid-Matrix aufweisen.

2. Dispersion nach Anspruch 1, **dadurch gekennzeichnet, dass** die mittlere Partikelgröße kleiner als 400 nm ist.

3. Dispersion nach den Ansprüchen 1 oder 2, **dadurch gekennzeichnet, dass** die BET-Oberfläche der Partikel zwischen 50 und 600 m2/g liegt.

4. Dispersion nach den Ansprüchen 1 bis 3, **dadurch gekennzeichnet, dass** deren Feststoffgehalt zwischen 0,1 und 70 Gew.-%, bezogen auf die gesamte Dispersion, liegt.

5. Dispersion nach den Ansprüchen 1 bis 4, **dadurch gekennzeichnet, dass** deren pH-Wert zwischen 3 und 12 liegt.

6. Dispersion nach den Ansprüchen 1 bis 5, **dadurch gekennzeichnet, dass** sie 0,3 - 20 Gew.-%, bezogen auf die gesamte Dispersion, mindestens eines Oxidationsmittels enthält.

7. Dispersion nach den Ansprüchen 1 bis 6, **dadurch gekennzeichnet, dass** sie zwischen 0,001 und 2 Gew.-%, bezogen auf die gesamte Dispersion, mindestens eines Oxidationsaktivators enthält.

8. Dispersion nach den Ansprüchen 1 bis 7, **dadurch gekennzeichnet, dass** sie 0,001 bis 2 Gew.-%, bezogen auf die gesamte Dispersion, mindestens eines Korrosionsinhibitors enthält.

9. Dispersion nach den Ansprüchen 1 bis 8 **dadurch gekennzeichnet, dass** sie 0,001 bis 10 Gew.-%, bezogen auf die gesamte Dispersion, mindestens eines oberflächenaktiven Stoffes enthält.

10. Dispersion nach den Ansprüchen 1 bis 9, **dadurch gekennzeichnet, dass** sie ein weiteres Metall- oder Metalloidoxid als Abrasiv enthält.

11. Verfahren zur Herstellung der Dispersion gemäß den Ansprüchen 1 bis 10, **dadurch gekennzeichnet, dass** man die Abrasivpartikel mit einem Energieeintrag von mindestens 200 KJ/m³ dispergiert.

12. Verfahren zur Herstellung der Dispersion nach Anspruch 11, **dadurch gekennzeichnet, dass** man zur Vermahlung und Dispergierung der Abrasivpartikel eine Vorrichtung verwendet, bei der die zu dispergierenden Teilchen unter hohem Druck stehen, über eine Düse entspannt werden und miteinander oder gegen Wandbereiche der Vorrichtung kollidieren.

13. Verwendung der Dispersion gemäß den Ansprüchen 1 bis 10 zum chemisch-mechanischen Polieren von dielektrischen Schichten, von Metallschichten, von Metalloidschichten, von Schichten mit niedriger Dielektrizitätskonstante ("Low-k"-Materialien) und zur Abtrennung der Abrasivkörper nach dem chemischen-mechanischen Polieren.

## Claims

1. Dispersion comprising abrasive particles, **characterized in that** it comprises pyrogenically prepared particles which have superparamagnetic metal oxide domains in a non-magnetic metal oxide or metalloid oxide matrix.

2. Dispersion according to Claim 1, **characterized in that** the average particle size is less than 400 nm.

3. Dispersion according to Claim 1 or 2, **characterized in that** the BET surface area of the particles is between 50 and 600 m²/g.

4. Dispersion according to Claims 1 to 3, **characterized in that** its solids content is between 0.1 and 70 wt. %, relative to the total dispersion.

5. Dispersion according to Claims 1 to 4, **characterized in that** its pH is between 3 and 12.

6. Dispersion according to Claims 1 to 5, **characterized in that** it comprises 0.3 - 20 wt. %, relative to the total dispersion, of at least one oxidizing agent.

7. Dispersion according to Claims 1 to 6, **characterized in that** it comprises between 0.001 and 2 wt. %, relative to the total dispersion, of at least one oxidation activator.

8. Dispersion according to Claims 1 to 7, **characterized in that** it comprises 0.001 to 2 wt. %, relative to the total dispersion, of at least one corrosion inhibitor.

9. Dispersion according to Claims 1 to 8, **characterized in that** it comprises 0.001 to 10 wt. %, relative to the total dispersion, of at least one surface-active substance.

10. Dispersion according to Claims 1 to 9, **characterized in that** it comprises a further metal oxide or metalloid oxide as an abrasive.

11. Process for preparing the dispersion according to Claims 1 to 10, **characterized in that** the abrasive particles are dispersed with an energy input of at least 200 KJ/m³.

12. Process for preparing the dispersion according to Claim 11, **characterized in that** the abrasive particles are ground and dispersed using a device in which the particles to be dispersed are under high pressure, are decompressed through a nozzle and collide with one another or against wall regions of the device.

13. Use of the dispersion according to Claims 1 to 10 for the chemical mechanical polishing of dielectric layers, of metal layers, of metalloid layers and of layers having a low dielectric constant ("low-k" materials) and for separating off the abrasive media after the chemical mechanical polishing.

## Revendications

1. Dispersion contenant des particules abrasives, **caractérisée en ce qu'**elle contient des particules produites de manière pyrogène, qui présentent des domaines d'oxyde métallique superparamagnétiques dans une matrice d'oxyde métallique ou d'oxyde métalloïde non magnétique.

2. Dispersion selon la revendication 1, **caractérisée en ce que** la taille moyenne de particules est inférieure à 400 nm.

3. Dispersion selon la revendication 1 ou 2, **caractérisée en ce que** la surface BET des particules se situe entre 50 et 600m²/g.

4. Dispersion selon les revendications 1 à 3, **caractérisée en ce que** sa teneur en matières solides se situe entre 0,1 et 70 % en poids, par rapport à la totalité de la dispersion.

5. Dispersion selon les revendications 1 à 4, **caractérisée en ce que** sa valeur de pH se situe entre 3 et 12.

6. Dispersion selon les revendications 1 à 5, **caractérisée en ce qu'**elle contient 0,3 à 20 % en poids, par rapport à la totalité de la dispersion, d'au moins un agent oxydant.

7. Dispersion selon les revendications 1 à 6, **caractérisée en ce qu'**elle contient entre 0,001 et 2 % en poids, par rapport à la totalité de la dispersion, d'au moins un activateur d'oxydation.

8. Dispersion selon les revendications 1 à 7, **caractérisée en ce qu'**elle contient 0,001 à 2 % en poids, par rapport à la totalité de la dispersion, d'au moins un inhibiteur de corrosion.

9. Dispersion selon les revendications 1 à 8, **caractérisée en ce qu'**elle contient 0,001 à 10 % en poids, par rapport à la totalité de la dispersion, d'au moins une substance tensioactive.

10. Dispersion selon les revendications 1 à 9, **caractérisée en ce qu'**elle contient un autre oxyde métallique ou oxyde métalloïde en tant qu'abrasif.

11. Procédé de préparation de la dispersion selon les revendications 1 à 10, **caractérisé en ce que** les particules abrasives sont dispersées avec un apport d'énergie d'au moins 200 KJ/m³.

12. Procédé de préparation de la dispersion selon la revendication 11, **caractérisé en ce qu'**un dispositif de broyage et de dispersion des particules abrasives est utilisé, dans lequel les particules à disperser sont sous pression élevée, sont détendues par l'intermédiaire d'une buse, et entrent en collision les unes avec les autres ou contre des secteurs de paroi du dispositif.

13. Utilisation de la dispersion selon les revendications 1 à 10 pour le polissage chimique et mécanique de couches diélectriques, de couches métalliques, de couches métalloïdes, de couches ayant des constantes diélectriques faibles (matériaux "Low-k") (matériaux à permittivité réduite) et pour la séparation des corps abrasifs après le polissage chimico-mécanique.
